# EUROPEAN PATENT SPECIFICATION

(11) **EP 2 537 725 B1**
(45) Date of publication and mention of the grant of the patent: **23.03.2016**
(21) Application number: 12168637.2
(22) Date of filing: 21.05.2012
(51) Int. Cl.: B60T 17/22, G01M 3/26, G01M 3/28

(54) **Device and method for leakage detection in a compressed air system**
Vorrichtung und Verfahren zur Leckerkennung in einem Druckluftsystem
Dispositif et procédé de détection des fuites dans un système d'air comprimé

(30) Priority: 22.06.2011 SE 1150575
(43) Date of publication of application: 26.12.2012
(73) Proprietor: Scania CV AB, 151 87 Södertälje (SE)
(72) Inventor: Kågebjer, Martin, 152 31 Södertälje (SE); Svensson, Martin, 113 46 Stockholm (SE); Eriksson, Axel, 112 18 Stockholm (SE)
(74) Representative: Scania CV AB

(56) References cited:
- WO-A1-02/14825
- WO-A1-2008/148436

## Description

### TECHNICAL FIELD

The present invention relates to a method for leakage detection in a compressed air system of a motor vehicle. The invention relates also to a computer programme product comprising programme code for a computer for implementing a method according to the invention. The invention relates also to a device for leakage detection in a compressed air system of a motor vehicle and to a motor vehicle equipped with the device.

### BACKGROUND

Vehicles today, e.g. trucks, are often equipped with a compressed air system for operating various brakes and ancillary equipment items. These vehicles have air intakes to supply air to a compressor which is adapted to compressing the air supplied and to feeding the compressed air to various circuits, some of which may be referred to as high-pressure circuits and some as low-pressure circuits. These circuits are themselves adapted to supplying compressed air to the various brakes or ancillary equipment items.

The compressed air system may be affected by various types of leakage, e.g. at O-rings or valves. Leakage from the compressed air system is of course undesirable and affects the vehicle's performance and safety.

It is desirable to be able to determine any leakage and locate as reliably and effectively as possible the compressed air system's leaking circuit or circuits, not least to make it easier for a repairer or mechanic to quickly find exactly where in the system there is leakage.

WO 2008/148436 A1 describes a diagnosis system for determining leakage in a compressed air system, particularly in utility vehicles. This involves estimating a parameter for an exponential function, Rossi Alfa, the magnitude of which is used to decide whether a leak has occurred or not. The diagnosis system does not indicate any way of deciding at an early stage if there is a possible leak in a high-pressure circuit or a low-pressure circuit of the compressed air system.

### SUMMARY OF THE INVENTION

An object of the present invention is to propose a novel and advantageous method for leakage detection in a compressed air system of a motor vehicle.

Another object of the invention is to propose a new and advantageous device and a new and advantageous computer programme for leakage detection in a compressed air system of a motor vehicle.

A further object of the invention is to propose an alternative method, an alternative device and an alternative computer programme for leakage detection in a compressed air system of a motor vehicle.

A further object of the invention is to propose a method, a device and a computer programme for conducting leakage detection in a compressed air system of a motor vehicle in a robust and relatively inexpensive way.

These objects are achieved with a method for leakage detection in a compressed air system of a motor vehicle according to claim 1.

An aspect of the invention is a proposed method for leakage detection in a compressed air system of a motor vehicle, which system is continuously pressurised during operation and comprises a plurality of circuits, some of which may be referred to as high-pressure circuits and some as low-pressure circuits, the pressure being monitored in fewer than the total number of circuits. The method comprises the steps, after said pressurisation has been switched off, of determining whether there is leakage in the system's high-pressure portion or low-pressure portion on the basis of values of a modulated leakage measurement at a first time and a second time which follow one another, and of deciding in which circuit there is leakage on the basis of modulated leakage measurements at a third time which isolatedly manifest said modulated leakage measurement for the circuits in which the pressure is monitored.

Said modulated leakage measurement may be determined by recursive estimation, which does not in itself involve expensive working memories of calculation means for applying the innovative method. The result is a relatively inexpensive method for leakage detection in a compressed air system.

Said third time may be a time which follows said first time and said second time.

The method may further comprise the steps of choosing a high-pressure circuit or a low-pressure circuit and determining whether there is leakage in the system's high-pressure portion or low-pressure portion on the basis of values of a modulated leakage measurement at said first time and said second time in said chosen high-pressure circuit or low-pressure circuit. This affords the advantage of limiting the number of possible circuits in the compressed air system which might be affected by leakage, which may be relevant information for a mechanic who has to repair a leak determined in the compressed air system.

The method may further comprise the steps of determining a ratio between a respective modulated leakage measurement at said first time and said second time, and of determining on the basis of said ratio whether there is leakage in the system's high-pressure portion or low-pressure portion. The result is a method for leakage detection which involves no great calculation load, with various obvious advantages, e.g. robustness and time efficiency.

The method may further comprise the step of determining that said chosen high-pressure circuit or low-pressure circuit is affected by a leak if said ratio is below a predetermined value, or the step of determining that said chosen high-pressure circuit or low-pressure circuit is not affected by a leak if said ratio is above a predetermined value. The result is a reduction in the number of possible circuits of the compressed air system in which there might be leakage.

The method may further comprise the step of determining that said chosen high-pressure circuit or low-pressure circuit is affected by a leak if said ratio is below a calculated value, or the step of determining that said chosen high-pressure circuit or low-pressure circuit is not affected by a leak if said ratio is above a calculated value. The result is a reduction in the number of possible circuits of the compressed air system in which there might be leakage.

The method may further comprise the of determining when or if said modulated leakage measurements at said third time isolatedly manifest said modulated leakage measurement for the circuits in which the pressure is monitored, and the step of determining said third time on the basis thereof. This makes it possible to determine a particularly suitable time for modulation of leakage measurements, resulting in an improved method for leakage detection in a compressed air system.

The method may further comprise the step of influencing the compressed air system so that a pressure drop takes place between said first time and said second time and/or between second time and said third time. The result is a relatively quick method for leakage detection in a compressed air system. The method may further comprise the step of influencing the compressed air system so that a pressure rise takes place before said first time. This makes possible a more robust and reliable method for determining whether there is a leak in a high-pressure circuit or a low-pressure circuit of the compressed air system.

The method may further comprise the step of determining which of the circuits in which pressure is not monitored has a leak on the basis of said modulated leakage measurements at said third time which isolatedly manifest said modulated leakage measurement for the circuits in which the pressure is monitored, and a result of said determination of whether there is leakage in the system's high-pressure portion or low-pressure portion. The result is a method for leakage detection which is inexpensive in requiring fewer pressure sensors than the total number of circuits in the compressed air system.

The method may further comprise the step of determining which of the circuits in which pressure is monitored has a leak on the basis of said modulated leakage measurements for the respective circuits at said third time. The result is a versatile and exact method for leakage detection in a compressed air system.

The method may further comprise the step of using the compressed air system's pressure and temperature as parameters on which to base determination of said modulated leakage measurement. An advantage of this is that sensors for measuring pressure and temperature are very exact, making it possible for leakage measurements to be modulated with high-quality relevant input signals. The result is quite an accurate method for detecting leakage in a compressed air system. Pressure sensors and temperature sensors are currently often already adequately provided, enabling cost-effective implementation of the invention in existing vehicles. The method is easy to implement in existing motor vehicles. Software for leakage detection in a compressed air system of a motor vehicle according to the invention may be installed in a control unit of the vehicle during the manufacture of the vehicle. A purchaser of the vehicle may thus have the possibility of choosing the method's function as an option. Alternatively, software comprising programme code for applying the innovative method for leakage detection in a compressed air system of a motor vehicle may be installed in a control unit of the vehicle on the occasion of upgrading at a service station, in which case the software may be loaded into a memory in the control unit. Implementing the innovative method is therefore cost-effective, particularly as no further components need be installed in the vehicle's compressed air system according to an aspect of the invention. Relevant hardware is currently already provided in the vehicle. The invention therefore represents a cost-effective solution to the problems indicated above.

Software which comprises programme code for leakage detection in a compressed air system of a motor vehicle is easy to update or replace. Various parts of the software containing programme code for leakage detection in a compressed air system of a motor vehicle may also be replaced independently of one another. This modular configuration is advantageous from a maintenance perspective.

An aspect of the invention is a proposed device for leakage detection in a compressed air system of a motor vehicle, which system is continuously pressurised during operation and comprises a plurality of circuits, some of which may be referred to as high-pressure circuits and some as low-pressure circuits, the pressure being monitored in fewer than the total number of circuits. The device comprises means, after said pressurisation has been switched off, for determining whether there is leakage in the system's high-pressure portion or low-pressure portion on the basis of values of a modulated leakage measurement at a first time and a second time which follow one another. The device further comprises means for deciding in which circuit there is leakage on the basis of modulated leakage measurements at a third time which isolatedly manifest said modulated leakage measurement for the circuits in which the pressure is monitored.

Said third time may be a time which follows said first time and said second time.

The device may further comprise:
- means for choosing a high-pressure circuit or a low-pressure circuit; and
- means for determining whether there is leakage in the system's high-pressure portion or low-pressure portion on the basis of values of a modulated leakage measurement at said first time and said second time in said chosen high-pressure circuit or low-pressure circuit.

The device may further comprise:
- means for determining a ratio between a respective modulated leakage measurement at said first time and said second time; and
- means for determining on the basis of said ratio whether there is leakage in the system's high-pressure portion or low-pressure portion.

The device may further comprise:
- means for determining that said chosen high-pressure circuit or low-pressure circuit is affected by a leak if said ratio is below a predetermined value, or
- means for determining that said chosen high-pressure circuit or low-pressure circuit is not affected by a leak if said ratio is above a predetermined value.

The device may further comprise:
- means for determining that said chosen high-pressure circuit or low-pressure circuit is affected by a leak if said ratio is below a calculated value, or
- means for determining that said chosen high-pressure circuit or low-pressure circuit is not affected by a leak if said ratio is above a calculated value.

The device may further comprise:
- means for determining when or if said modulated leakage measurements at said third time isolatedly manifest said modulated leakage measurement for the circuits in which the pressure is monitored; and
- means for determining said third time on the basis thereof.

The device may further comprise:
- means for influencing the compressed air system so that a pressure drop takes place between said first time and said second time and/or between second time and said third time.

The device may further comprise:
- means for influencing the compressed air system so that a pressure rise takes place before said first time.

The device may further comprise:
- means for determining which of the circuits in which pressure is not monitored has a leak on the basis of said modulated leakage measurements at said third time which isolatedly manifest said modulated leakage measurement for the circuits in which the pressure is monitored, and a result of said determination of whether there is leakage in the system's high-pressure portion or low-pressure portion.

The device may further comprise:
- means for determining which of the circuits in which pressure is monitored has a leak on the basis of said modulated leakage measurement for the respective circuits at said third time.

The device may further comprise:
- means for using the compressed air system's pressure and temperature of the compressed air system as parameters on which to base determination of said modulated leakage measurement.

The above objects are also achieved with a motor vehicle which is provided with the device for leakage detection in a compressed air system. The vehicle may be a truck, bus or car.

An aspect of the invention is a proposed computer programme for leakage detection in a compressed air system of a motor vehicle, which programme contains programme code stored on a computer-readable medium for causing an electronic control unit or another computer connected to the electronic control unit to perform steps according to any one of claims 1-9.

An aspect of the invention is a proposed computer programme for leakage detection in a compressed air system of a motor vehicle, which programme contains programme code for causing an electronic control unit or another computer connected to the electronic control unit to perform steps according to any one of claims 1-9.

An aspect of the invention is a proposed computer programme product containing a programme code stored on a computer-readable medium for performing method steps according to any one of claims 1-9 when said programme is run on an electronic control unit or another computer connected to the electronic control unit.

Further objects, advantages and novel features of the present invention will become apparent to one skilled in the art from the following details, and also by applying the invention. Although the invention is described below, it should be noted that it is not limited to the specific details described. One skilled in the art who has access to the teachings herein will recognise further applications, modifications and incorporations within other fields, which are within the scope of the invention.

### BRIEF DESCRIPTION OF THE DRAWINGS

Fuller understanding of the present invention and further objects and advantages of it may be gathered by reading the following detailed description in conjunction with the accompanying drawings, in which the same reference notations pertain to similar parts in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3a is a schematic diagram of air pressure in circuits of a compressed air system as a function of time;
Figure 3b is a schematic diagram of leak diameters in a circuit of a compressed air system as a function of time;
Figure 3c is a schematic diagram of leak diameters in a circuit of a compressed air system as a function of time;
Figure 4a is a schematic flowchart of a method according to an embodiment of the invention;
Figure 4b is a more detailed schematic flowchart of a method according to an embodiment of the invention; and
Figure 5 illustrates schematically a computer according to an embodiment of the invention.

### DETAILED DESCRIPTION OF THE DRAWINGS

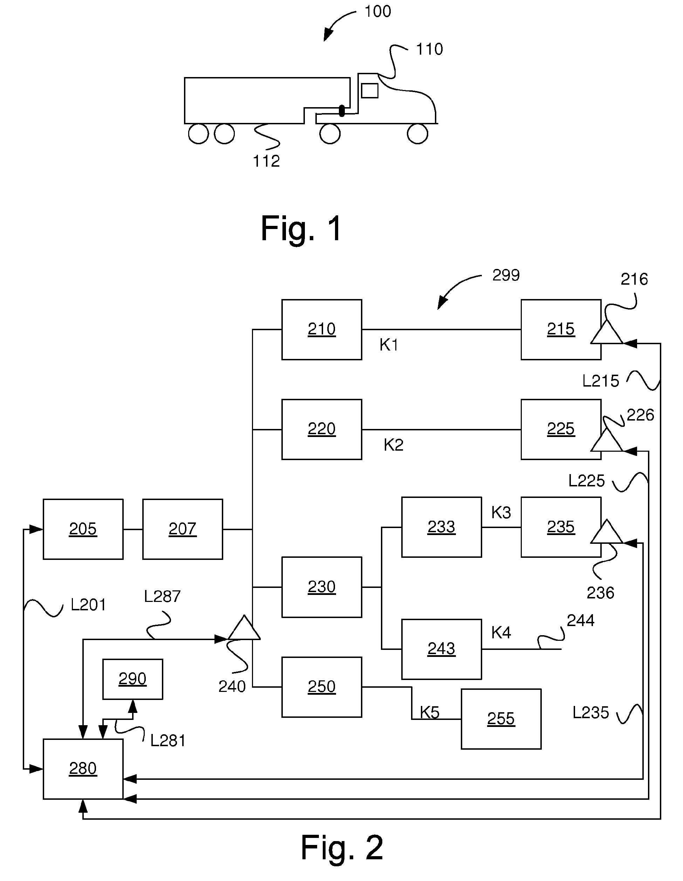

Figure 1 depicts a side view of a vehicle 100. The vehicle exemplified comprises a tractor unit 110 and a semitrailer 112. The vehicle may be a heavy vehicle, e.g. a truck or a bus. The vehicle may alternatively be a car.

The term "link" refers herein to a communication link which may be a physical line such as an opto-electronic communication line, or a non-physical line such as a wireless connection, e.g. a radio link or microwave link.

Figure 2 depicts a compressed air system 299 of the vehicle 100, according to an embodiment of the invention. The compressed air system is situated in the tractor unit 110 and comprises a number of components described in more detail below and connected to one another by compressed air lines, e.g. hoses or pipes. These lines are illustrated schematically in Figure 2, may consist of any suitable material, e.g. rubber or steel, and may be of any suitable size.

The compressed air system 299 comprises a compressor 205 adapted to receiving surrounding air, compressing it and supplying the compressed air to a filter 207 which is adapted to filtering the air in a conventional way in order to reduce moisture content and, in certain cases, undesirable particles and substances, e.g. oil, fumes or dust.

The compressor 205 is adapted to feeding the filtered and compressed air to five circuits K1-K5.

The first circuit K1 comprises a safety valve 210 and an air container 215 which is adapted to holding air intended to be used for the vehicle's rear brakes. This first circuit is a so-called high-pressure circuit.

The second circuit K2 comprises a safety valve 220 and an air container 225 which is adapted to holding air intended to be used for the vehicle's front brakes. This second circuit is a so-called high-pressure circuit.

The third circuit K3 comprises a safety valve 233 and an air container 235 which is adapted to holding air intended to be used for the vehicle's parking brakes and any semitrailer. This third circuit is a so-called low-pressure circuit.

The fourth circuit K4 comprises a safety valve 243 and a feed line 244 which is adapted to conveying air intended to be used for various ancillary equipment items of the vehicle, e.g. engine dampers or an SCR system. This fourth circuit is a so-called low-pressure circuit.

A pressure limiter 230 is provided upstream of the third and fourth circuits K3, K4 to lower the pressure in them to any desired level from a delivery pressure of the air handling unit 201.

The fifth circuit comprises a safety valve 250 and an air container 255 which is adapted to holding air intended to be used for a suspension system of the vehicle. This fifth circuit is a so-called high-pressure circuit.

According to an example, during operation of the vehicle a delivery pressure from the compressor 205 may be about 12 bar. This is referred to as high pressure and the first, second and fifth circuits (K1, K2, K5) as high-pressure circuits. According to an example, during operation of the vehicle a pressure downstream of the pressure limiter 230 may be about 8 bar. This is referred to as low pressure and the third and fourth circuits (K3, K4) as low-pressure circuits.

A temperature sensor 240 is provided downstream of the air handling unit 201 to detect a prevailing temperature T of the air in the compressed air system. The temperature sensor 240 is arranged for communication with a first control unit 280 via a link L287. The temperature sensor 240 is adapted to continuously sending to the first control unit 280 via the link L287 signals which contain information about the prevailing temperature T of the air.

A first pressure sensor 216 is provided adjacent to the air container 215 to continuously detect a prevailing pressure P215 in the first circuit K1. The first pressure sensor 216 is arranged for communication with the first control unit 280 via a link L215. The first pressure sensor 216 is adapted to sending to the first control unit 280 via the link L215 signals which contain information about a prevailing pressure P215 in the first circuit K1.

A second pressure sensor 226 is provided adjacent to the air container 225 to continuously detect a prevailing pressure P225 in the second circuit K2. The second pressure sensor 226 is arranged for communication with the first control unit 280 via a link L225. The second pressure sensor 226 is adapted to sending to the first control unit 280 via the link L225 signals which contain information about a prevailing pressure P225 in the second circuit K2.

A third pressure sensor 236 is provided adjacent to the air container 235 to continuously detect a prevailing pressure P235 in the third circuit K3. The third pressure sensor 236 is arranged for communication with the first control unit 280 via a link L235. The third pressure sensor 236 is adapted to sending to the first control unit 280 via the link L235 signals which contain information about a prevailing pressure P235 in the third circuit K3.

It should be noted that the compressed air system 299 comprises five circuits and that there are three pressure sensors so arranged that one high-pressure circuit (K5) and one low-pressure circuit (K4) have no pressure sensor.

The invention is particularly suitable for a compressed air system which comprises N circuits, where N is a positive whole number and there are N-2 pressure sensors so arranged that one high-pressure circuit and one low-pressure circuit have no pressure sensor.

A proposed example is a compressed air system comprising six circuits, with four pressure sensors so arranged that one high-pressure circuit and one low-pressure circuit have no pressure sensor.

The first control unit 280 is arranged for communication with the compressor 205 via a link L201. The first control unit 280 is adapted to controlling the compressor 205, e.g. with regard to driving power.

According to a version, the first control unit 280 is arranged to use the signals received which contain information about prevailing pressure in circuits K1, K2 and K3, and the signal which contains a prevailing temperature T of the compressed air system 299, as a basis for continuously determining modulated leakage measurements for the circuits which are provided with pressure sensors of the compressed air system.

In the embodiment described with reference to Figure 2, circuits K1, K2, K3 and K5 comprise containers for holding compressed air. Another embodiment has none of the containers depicted in Figure 2, so the respective circuits K1-K5 are adapted to feeding air directly to respective vehicle brakes, suspension equipment or ancillary equipment items. In a further example, any suitable circuit comprises a container for holding air. The compressed air system 299 may be equipped with one or more containers pertaining to one or more respective air pressure circuits K1-K5.

A second control unit 290 is arranged for communication with the first control unit 280 via a link L281. The second control unit 290 may be detachably connected to the first control unit 280. The second control unit 290 may be a control unit external to the vehicle 100. The second control unit 290 may be adapted to performing the innovative method steps according to the invention. The second control unit 290 may be used to cross-load software to the first control unit 280, particularly software for applying the innovative method. The second control unit 290 may alternatively be arranged for communication with the first control unit 280 via an internal network in the vehicle. The second control unit 290 may be adapted to performing substantially similar functions to the first control unit 280, e.g. to determining, after a pressurisation of the compressed air system 299 has been switched off, whether there is leakage in the system's high-pressure portion on the basis of values of a modulated leakage measurement at a first time and a second time which follow one another, and to deciding in which circuit of the compressed air system there is leakage on the basis of modulated leakage measurements at a third time which isolatedly manifest said modulated leakage measurement for the circuits in which the pressure is monitored.

Said modulated leakage measurements may represent the cross-section of a leak. The leak's cross-section may be represented by a circle with a certain diameter. According to an aspect of the invention, the model for estimating the leak's cross-section is a model for its recursive estimation from a physical model. The physical model is based on the compressed air system's prevailing pressure and temperature. The principle of the model is that leakage mass flow is directly proportional to the pressure in the respective circuit of the compressed air system. The leakage mass flow may be derived from the general gas law.

According to an embodiment, a CUSUM algorithm may be applied to the recursive estimate of the leak's cross-section in order to reduce the influence of noise and thereby make a more accurate determination possible if the modulated leakage measurements are greater than a predetermined threshold value.

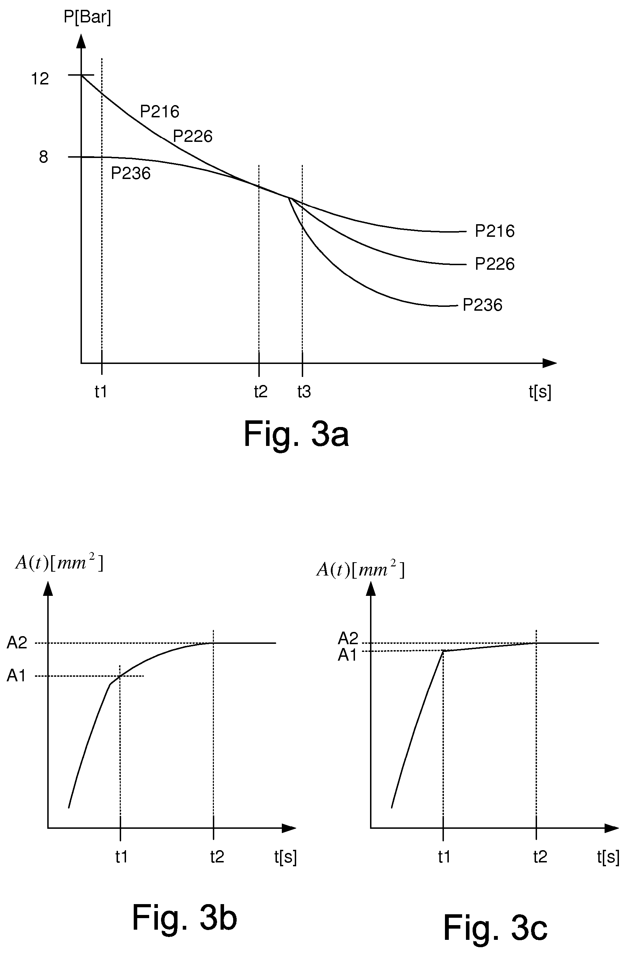

Figure 3a is a schematic diagram of measured air pressure in circuits of a compressed air system as a function of time. In this example there is a leak in one of the circuits K1-K5. The graphs represent pressures P216, P226 and P236 measured by the respective pressure sensors 216, 226 and 236. The measurements of air pressure in the various circuits begin after the air handling device 201 has been switched off so that no further air is supplied to the five circuits K1-K5.

An aspect of the invention involves choosing any suitable first time t1 at which there is a relatively high pressure in the various circuits. After a certain time the pressure in the high-pressure circuits and the low-pressure circuit will converge. This takes place at a second time t2. After a certain further time the pressure in the various circuits will diverge. At a chosen time t3 it may be assumed that the pressure in the various circuits is isolatable, i.e. that their pressures are distinguishable in a desirable way.

We describe below with reference to Figures 3b and 3c examples where it is possible at an early stage to determine whether there is a leak in a high-pressure circuit or a low-pressure circuit of the compressed air system 299. Let us assume here that there actually is leakage in the third circuit K3.

Figure 3b is a schematic diagram of a modelled diameter A of a leak in a circuit of a compressed air system as a function of time. The circuit may be any chosen circuit provided with a sensor for pressure measurement. The circuit may be a high-pressure circuit or a low-pressure circuit.

It is assumed in this example that the chosen circuit is the second circuit K2, which is a high-pressure circuit according to Figure 2.

In the chosen second circuit K2, a modelled leak diameter A1 is then determined at a first time t1, and a second modelled leak diameter A2 at a second time t2. The first time t1 and the second time t2 may be chosen as appropriate. A RATIO=A2/A1 is then determined.

If the RATIO determined exceeds a predetermined alternatively calculated threshold value TH, it may be determined that there is no leakage in a circuit of the same kind as the second circuit K2, i.e. a high-pressure circuit. TH may be any suitable value, e.g. a value calculated on the basis of prevailing pressure determined in the respective high-pressure and low-pressure circuits at the first time t1. TH may for example be calculated as TH=1 +(P215/P235-1)/2 or TH=1+(P225/P235-1)/2.

An amount of change in modulated leakage measurements, if incorrect pressures are used, is directly proportional to a ratio between pressures determined in the high-pressure circuits and low-pressure circuits by the measurement at the first time t1. A theoretical change in the modulated leakage measurement between the first time t1 and the second time t2 is arrived at by the RATIO=pH/pL, in which pH is a pressure in a high-pressure circuit and pL a pressure in a low-pressure circuit.

In this example it is thus possible to determine that the leaking circuit is not a high-pressure circuit, since RATIO>TH.

Figure 3c is a schematic diagram of a modelled leak diameter A in a circuit of a compressed air system as a function of time. It refers to an aspect of the example described with reference to Figure 3b.

In this example, the chosen circuit is the third circuit K3, which is a low-pressure circuit according to Figure 2.

In the chosen third circuit K3, a modelled leak diameter A1 is determined at a first time t1, and a second modelled leak diameter A2 at a second time t2. The first time t1 and the second time t2 may be chosen as appropriate. A RATIO=A1/A2 is then determined.

If the RATIO determined is below said predetermined calculated threshold value TH, it may be determined that there a leak in a circuit of the same kind as the third circuit K3, i.e. a low-pressure circuit. In this example it is thus possible to determine that the leaking circuit is not a high-pressure circuit, since RATIO<TH.

It should be noted that in a case where a low-pressure circuit is chosen for deciding whether there is leakage in a high-pressure circuit or a low-pressure circuit and there is in fact leakage in a high-pressure circuit, the RATIO=A1/A2 is used according to the innovative method.

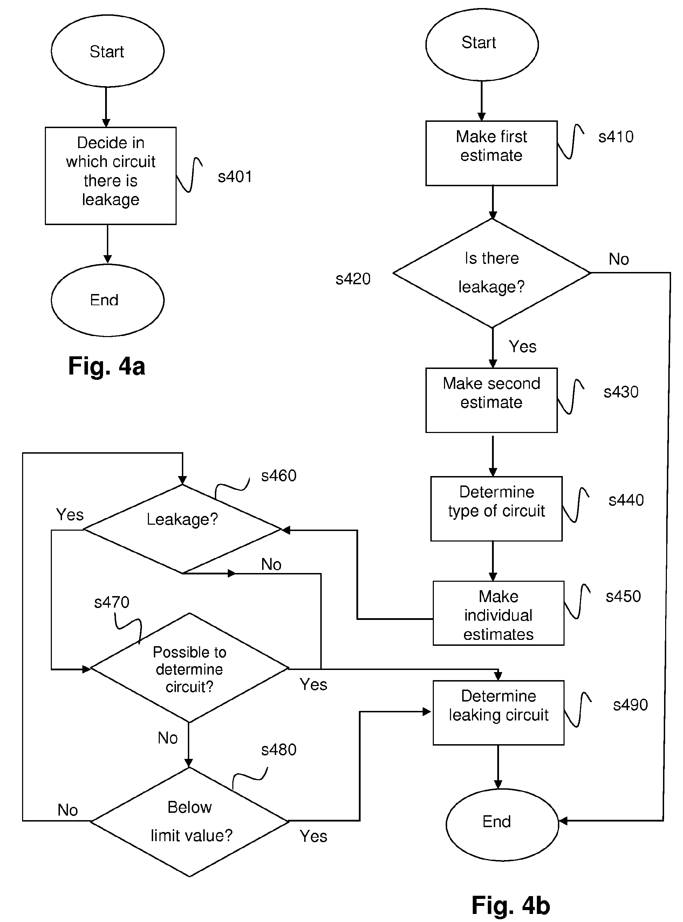

Figure 4a is a schematic flowchart of a method for leakage detection in a compressed air system of a motor vehicle, which system is continuously pressurised during operation and comprises a plurality of circuits, some of which may be referred to as high-pressure circuits and some as low-pressure circuits, the pressure being monitored in fewer than the total number of circuits, according to an embodiment of the invention. The method comprises a first step s401 comprising the steps of:
- after said pressurisation has been switched off, determining whether there is leakage in the system's high-pressure portion or low-pressure portion on the basis of values of a modulated leakage measurement at a first time and a second time which follow one another; and
- deciding in which circuit there is leakage on the basis of modulated leakage measurements at a third time which manifest said modulated leakage measurement for the circuits in which the pressure is monitored. The method ends after step s401.

Figure 4b is a schematic flowchart of a method for leakage detection in a compressed air system 299 of a motor vehicle 100, which system is continuously pressurised during operation and comprises a plurality of circuits K1-K5, some of them classified as high-pressure circuits K1, K2, K5 and some as low-pressure circuits K3, K4, the pressure being monitored in fewer than the total number of circuits, according to an embodiment of the invention.

The method comprises a first step s410 comprising the step of determining an estimate of a first modulated leakage measurement A1 of the compressed air system in a chosen circuit at a first time t1. Step s410 is followed by a step s420.

Method step s410 may be preceded by a step whereby the compressor 205 is caused to provide a maximum permissible pressure in the compressed air system 299. Step s410 may be preceded by a step whereby the air handling system 201 is switched off.

Method step s420 comprises the step of determining whether there is a leak in the compressed air system 299. This may be done by comparing said first modulated leakage measurement A1 with a predetermined limit value THleakage1. If said first modulated leakage measurement A1 is greater than said predetermined limit value THleakage1, it may be determined that there is leakage in the compressed air system and a subsequent method step s430 takes place. If said first modulated leakage measurement A1 is smaller than said predetermined limit value THleakage1, it may be determined that there is no leakage in the compressed air system and the method ends.

Method step s430 comprises the step of determining an estimate of a second modulated leakage measurement A2 of the compressed air system in said chosen circuit at a second time t2. Step s430 is followed by a step s440.

Step s430 may be preceded by a step whereby the pressure in the compressed air system is actively reduced in any suitable way. The estimate of the second modulated leakage measurement A2 may thus be made earlier than if a similar reduction of the pressure in the compressed air system was due solely to leakage.

Step s430 may also comprise the step of comparing the second modulated leakage measurement A2 determined with a predetermined threshold value THleakage2. If the second modulated leakage measurement is larger than the predetermined threshold value THleakage2, it may be affirmed that there is leakage in the compressed air system. THleakage1 may according to an aspect of the invention be smaller than THleakage2.

Method step s440 comprises the step of determining whether there is leakage in a high-pressure circuit or a low-pressure circuit of the compressed air system on the basis of said first modulated leakage measurement A1 and said second modulated leakage measurement A2. An embodiment of the invention determines the RATIO=A2/A1 and compares it with the predetermined or calculated threshold value TH as described with reference to Figures 3a-3c above. Step s440 is followed by a step s450.

Method step s450 comprises the step of determining a respective estimate of modulated leakage measurements A31, A32 and A33 for the circuits of the compressed air system which are provided with a pressure sensor, in this example the respective circuits K1, K2 and K3. Said modulated leakage measurements A31, A32 and A33 are related to a third time t3 which may be subsequent to the second time t2. According to an example the third time t3 may be determined as a time at which the respective pressures prevailing in the circuits with pressure sensors have diverged enough to be isolatable. Step s450 is followed by a step s460.

Step s450 may be preceded by a step whereby the air pressure in the compressed air system 299 is actively reduced in any suitable way. This makes it possible for the estimation of the three modulated leakage measurements A31, A32 and A33 to be done earlier than if a similar reduction of the air pressure in the compressed air system was due solely to leakage.

Method step s460 comprises the step of determining whether there is leakage in any of the circuits provided with pressure sensors, on the basis of the leakage measurements A31, A32 and A33 modulated at step s450. This may be done by comparing said modulated leakage measurements A31, A32 and A33 with a predetermined limit value THleakage. If any of said modulated leakage measurements A31, A32 and A33 is larger than said predetermined limit value THleakage, it may be determined that there is leakage in one of these circuits and a subsequent method step s470 may be performed. If said modulated leakage measurements A31, A32 and A33 are all smaller than said predetermined limit value THleakage, it may be determined that there is no leakage in any of these circuits and a subsequent method step s490 is performed.

Method step s470 comprises the step of determining whether it is possible to determine which of the three circuits has leakage on the basis of the estimates of the first and second modulated leakage measurements A1 and A2 for the respective measurable circuits. If this is possible, step s490 is performed. If it is not possible, a subsequent step s480 is performed.

Method step s480 comprises the step of determining whether the pressure in the most leaky of the circuits which are provided with pressure sensors is below a predetermined value, which may for example be 4 bar. If the pressure of the most leaky circuit is below the predetermined value, a subsequent step s490 is performed. If the pressure of the most leaky circuit is not below the predetermined value, this is then awaited, i.e. for the pressure in the most leaky circuit to be below said predetermined pressure value, and step s460 is performed again.

Method step s490 comprises the step of identifying the circuit or circuits in which there is leakage.

According to an embodiment, step s490 comprises the step of determining which of the circuits in which pressure is not monitored has leakage on the basis of said modulated leakage measurements A31, A32 and A33 at said third time which isolatedly manifest said modulated leakage measurement for the circuits in which the pressure is monitored, and a result of said determination of whether there is leakage in the system's high-pressure portion or low-pressure portion.

It is possible in this case to determine by process of elimination which of the circuits not provided with pressure sensors is affected by leakage, since there is no leakage in the circuits which are provided with pressure sensors, by taking into account information determined about whether there is leakage in a high-pressure circuit or a low-pressure circuit.

According to an embodiment, step s490 comprises the step of determining which of the circuits in which pressure is monitored has leakage on the basis of modulated leakage measurements A31, A32 and A33 at the third time t3 for the respective circuits provided with pressure sensors.

According to an embodiment, step s490 comprises the step of determining which among the circuits in which pressure is monitored has most leakage on the basis of modulated leakage measurements A31, A32 and A33 at the third time t3 for the respective circuits provided with pressure sensors.

According to an embodiment, step s490 comprises the step of determining a plurality of leaking circuits in the compressed air system 299 by combining various embodiments described above for step s490.

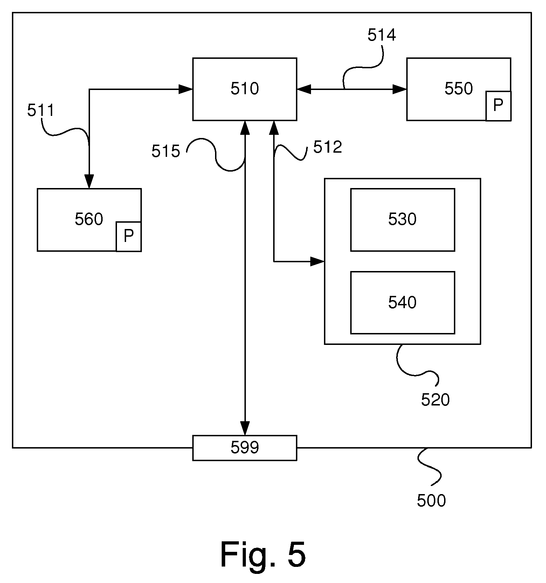

Figure 5 is a diagram of a version of a device 500. In a version, the control units 280 and 290 described with reference to Figure 2 may comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 280. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for determining, after a pressurisation of a compressed air system of a vehicle has been switched off, whether there is leakage in the compressed air system's high-pressure portion or low-pressure portion on the basis of values of a modulated leakage measurement at a first time and a second time which follow one another, and for deciding in which circuit there is leakage on the basis of modulated leakage measurements A31, A32 and A33 at a third time which according to an example follows said first time and said second time, which measurements A31, A32 and A33 at said third time isolatedly manifest said modulated leakage measurement for the circuits in which the pressure is monitored according to the innovative method.

The programme P may comprise routines for determining whether there is leakage in the system's high-pressure portion or low-pressure portion on the basis of values of a modulated leakage measurement at said first time and said second time in a chosen high-pressure circuit or low-pressure circuit.

The programme P may comprise routines for determining a ratio between a respective modulated leakage measurement at said first time and said second time, e.g. the RATIO=A2/A1, and
- on the basis of said ratio, determining whether there is leakage in the system's high-pressure portion or low-pressure portion.

The programme P may comprise routines for determining which of the circuits in which pressure is not monitored has a leak on the basis of said modulated leakage measurements A31, A32 and A33 at said third time which isolatedly manifest said modulated leakage measurement for the circuits in which the pressure is monitored, and a result of said determination of whether there is leakage in the system's high-pressure portion or low-pressure portion.

The programme P may comprise routines for determining which of the circuits in which pressure is monitored has a leak on the basis of said modulated leakage measurement at said first time and said second time.

The programme P may be stored in an executable form or a compressed form in a memory 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing unit 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may have, for example, the links L201, L215, L225, L235, L281 and L287 connected to it (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about a prevailing pressure in various parts of the compressed air system 299, e.g. pressures P215, P225 and P235. According to a version, signals received on the data port 599 contain information about a prevailing temperature T of the air in the compressed air system. The signals received on the data port 599 may be used by the device 500, e.g. to modulate continuously a number of leakage measurements in different circuits of the compressed air system 299. The device 500 is adapted to determining whether there is leakage in a high-pressure circuit or a low-pressure circuit of the compressed air system 299, in accordance with an aspect of the present invention. The device 500 is adapted to deciding in which circuit or circuits K1-K5 there is leakage, in accordance with an aspect of the present invention.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will suggest themselves to one skilled in the art. The embodiments were chosen and described in order best to explain the principles of the invention and their practical applications and hence to make it possible for one skilled in the art to understand the invention for various embodiments and with the various modifications appropriate to the intended use.

## Claims

1. A method for leakage detection in a compressed air system (299) of a motor vehicle (100; 110), which system is continuously pressurised during operation and comprises a plurality of circuits (K1-K5), some of which may be referred to as high-pressure circuits and some as low-pressure circuits, the pressure being monitored in fewer circuits than the total number of circuits,
**characterised by** the steps
- after said pressurisation has been switched off, of determining whether there is leakage in the system's high-pressure portion or low-pressure portion on the basis of values of a modulated leakage measurement (A1, A2) at a first time (t1) and a second time (t2), which two times follow one another;
- of deciding in which circuit there is leakage on the basis of modulated leakage measurements (A31, A32, A33) at a third time (t3) at which they isolatedly manifest said modulated leakage measurement for the circuits in which the pressure is monitored.

2. A method according to claim 1, further comprising the steps of
- choosing a high-pressure circuit or a low-pressure circuit; and
- determining whether there is leakage in the system's high-pressure portion or low-pressure portion on the basis of values of a modulated leakage measurement at said first time (t1) and said second time (t2) in said chosen high-pressure circuit or low-pressure circuit.

3. A method according to claim 1 or 2, further comprising the steps of:
- determining a ratio (RATIO; A2/A1; A1/A2) between a respective modulated leakage measurement at said first time (t1) and said second time (t2); and
- determining on the basis of said ratio (RATIO) whether there is leakage in the system's high-pressure portion or low-pressure portion.

4. A method according to claim 3, further comprising the step of
- determining whether said chosen high-pressure circuit or low-pressure circuit is affected by a leak if said ratio (RATIO) is below a predetermined value,
or the step of
- determining that said chosen high-pressure circuit or low-pressure circuit is not affected by a leak if said ratio (RATIO, A2/A1, A1/A2) is above a predetermined value.

5. A method according to any one of the foregoing claims, further comprising the steps of:
- determining when or if said modulated leakage measurements (A31, A32, A33) at said third time (t3) isolatedly manifest said modulated leakage measurement for the circuits in which the pressure is monitored; and
- determining said third time (t3) on the basis thereof.

6. A method according to any one of the foregoing claims, further comprising the step of:
- influencing the compressed air system so that a pressure drop takes place between said first time (t1) and said second time (t2), and/or between said second time (t2) and said third time (t3).

7. A method according to any one of the foregoing claims, further comprising the step of:
- determining which of the circuits in which pressure is not monitored has a leak on the basis of said modulated leakage measurements at said third time which isolatedly manifest said modulated leakage measurement (A31, A32, A33) for the circuits in which the pressure is monitored, and a result of said determination of whether there is leakage in the system's high-pressure portion or low-pressure portion.

8. A method according to any one of the foregoing claims, further comprising the step of:
- determining which of the circuits in which pressure is monitored has a leak on the basis of said modulated leakage measurements (A31, A32, A33) for the respective circuits at said third time (t3).

9. A method according to any one of the foregoing claims, further comprising the step of:
- using the compressed air system's pressure and temperature as parameters on which to base determination of said modulated leakage measurements (A1, A2, A31, A32, A33).

10. A device for leakage detection in a compressed air system (299) of a motor vehicle (100; 110), which system is continuously pressurised during operation and comprises a plurality of circuits (K1-K5), some of which may be referred to as high-pressure circuits and some as low-pressure circuits, the pressure being monitored in fewer circuits than the total number of circuits,
characterised
- means (280; 290; 500), after said pressurisation has been switched off, for determining whether there is leakage in the system's high-pressure portion or low-pressure portion on the basis of values of a modulated leakage measurement (A1, A2) at a first time (t1) and a second time (t2), which two times follow one another;
- means (280; 290; 500) for deciding in which circuit there is leakage on the basis of modulated leakage measurements (A31, A32, A33) at a third time (t3) which follows said first time (t1) and second time (t2) and at which they manifest said modulated leakage measurement for the circuits in which the pressure is monitored.

11. A device according to claim 10, further comprising
- means (280; 290; 500) for choosing a high-pressure circuit or a low-pressure circuit; and
- means (280; 290; 500) for determining whether there is leakage in the system's high-pressure portion or low-pressure portion on the basis of values of a modulated leakage measurement at said first time (t1) and said second time (t2) in said chosen high-pressure circuit or low-pressure circuit.

12. A device according to claim 10 or 11, further comprising:
- means (280; 290; 500) for determining a ratio (RATIO, A2/A1, A1/A2) between a respective modulated leakage measurement (A1, A2) at said first time (t1) and said second time (t2); and
- means (280; 290; 500) for determining on the basis of said ratio whether there is leakage in the system's high-pressure portion or low-pressure portion.

13. A device according to claim 12, further comprising
- means (280; 290; 500) for determining whether said chosen high-pressure circuit or low-pressure circuit is affected by a leak if said ratio (RATIO) is below a predetermined value, or
- means (280; 290; 500) for determining that said chosen high-pressure circuit or low-pressure circuit is not affected by a leak if said ratio (RATIO) is above a predetermined value.

14. A device according to any one of claims 10-13, further comprising:
- means (280; 290; 500) for determining when or if said modulated leakage measurements (A31, A32, A33) at said third time (t3) isolatedly manifest said modulated leakage measurement for the circuits in which the pressure is monitored; and
- means (280; 290; 500) for determining said third time (t3) on the basis thereof.

15. A device according to any one of claims 10-14, further comprising:
- means (280; 290; 500) for influencing the compressed air system so that a pressure drop takes place between said first time (t1) and said second time (t2), and/or between said second time (t2) and said third time (t3).

16. A device according to any one of claims 10-15, further comprising:
- means (280; 290; 500) for determining which of the circuits in which pressure is not monitored has a leak on the basis of said modulated leakage measurements (A31, A32, A33) at said third time which isolatedly manifest said modulated leakage measurement for the circuits in which the pressure is monitored, and a result of said determination of whether there is leakage in the system's high-pressure portion or low-pressure portion.

17. A device according to any one of claims 10-16, further comprising:
- means (280; 290; 500) for determining which of the circuits in which pressure is monitored has a leak on the basis of said modulated leakage measurements (A31, A32, A33) for the respective circuits at said third time (t3).

18. A device according to any one of claims 10-17, further comprising:
- means (280; 290; 500) for using the compressed air system's pressure and temperature as parameters on which to base determination of said modulated leakage measurements.

19. A motor vehicle (100; 110) provided with a device according to any one of claims 10-18.

20. A motor vehicle (100; 110) according to claim 19, which vehicle is any from among truck, bus or car.

21. A computer programme (P) for leakage detection in a compressed air system of a motor vehicle, which programme (P) contains programme code for causing an electronic control unit (280; 500) or another computer (290; 500) connected to the electronic control unit (280; 500) to perform steps according to any one of claims 1-9.

22. A computer programme product containing a programme code stored on a computer-readable medium for performing method steps according to any one of claims 1-9 when said computer programme is run on an electronic control unit (280; 500) or another computer (290; 500) connected to the electronic control unit (280; 500).

## Patentansprüche

1. Verfahren zum Erkennen einer Undichtigkeit in einem Druckluftsystem (299) eines Kraftfahrzeugs (100; 110), wobei das System während des Betriebs kontinuierlich mit Druck beaufschlagt wird und eine Vielzahl von Kreisläufen (K1-K5) umfasst, von denen einige Hockdruckkreisläufe und einige Niederdruckkreisläufe betreffen können, und wobei der Druck in einer Anzahl von Kreisläufen überwacht wird, die geringer als die Anzahl aller Kreisläufe ist,
**gekennzeichnet durch** die Schritte:
- Ermitteln auf der Grundlage von modulierten Undichtigkeitsmesswerten (A1, A2) in einer ersten Zeit (t1) und einer zweiten Zeit (t2), ob eine Undichtigkeit in dem Hockdruck- oder Niederdruckbereich des Systems vorhanden ist, nachdem die Druckbeaufschlagung ausgeschaltet wurde, wobei die beiden Zeiten aufeinander folgen;
- Bestimmen, in welchem Kreislauf eine Undichtigkeit vorhanden ist, auf der Grundlage von modulierten Undichtigkeitsmesswerten (A31, A32, A33) in einer dritten Zeit (t3), in der diese den modulierten Undichtigkeitsmesswert für die Kreisläufe vereinzelt bekannt gegeben, in denen der Druck überwacht wird.

2. Verfahren nach Anspruch 1, das ferner die Schritte umfasst:
- Auswählen eines Hochdruckkreislaufs oder eines Niederdruckkreislaufs; und
- Ermitteln auf der Grundlage von Undichtigkeitsmesswerten in der ersten Zeit (t1) und der zweiten Zeit (t2) in dem ausgewählten Hochdruck- oder Niederdruckkreislauf, ob eine Undichtigkeit in dem Hochdruck- oder Niederdruckbereich des Systems vorhanden ist.

3. Verfahren nach Anspruch 1 oder 2, das ferner die Schritte umfasst:
- Ermitteln eines Verhältnisses (RATIO; A2/A1; A1/A2) zwischen einem entsprechenden modulierten Undichtigkeitsmesswert in der ersten Zeit (t1) und einem entsprechenden modulierten Undichtigkeitsmesswert in der zweiten Zeit (t2); und
- Ermitteln auf der Grundlage des Verhältnisses (RATIO), ob eine Undichtigkeit in dem Hochdruck- oder Niederdruckbereich des Systems vorhanden ist.

4. Verfahren nach Anspruch 3, das ferner den Schritt umfasst:
- Ermitteln, ob der ausgewählte Hochdruck- oder Niederdruckkreislauf von einer Undichtigkeit betroffen ist, wenn das Verhältnis (RATIO) kleiner als ein vorbestimmter Wert ist, oder
- Bestimmen, dass der ausgewählte Hochdruck- oder Niederdruckkreislauf nicht von einer Undichtigkeit betroffen ist, wenn das Verhältnis (RATIO, A2/A1, A1/A2) größer als ein vorbestimmter Wert ist.

5. Verfahren nach einem der vorangegangenen Ansprüche, das ferner die Schritte umfasst:
- Ermitteln, wann oder ob die modulierten Undichtigkeitsmesswerte (A31, A32, A33) in der dritten Zeit (t3) den modulierten Undichtigkeitsmesswert für die Kreisläufe vereinzelt bekannt geben, in denen der Druck überwacht wird; und
- Ermitteln der dritten Zeit (t3) auf der Grundlage davon.

6. Verfahren nach einem der vorangegangenen Ansprüche, das ferner den Schritt umfasst:
- Einwirken auf das Druckluftsystem, sodass ein Druckabfall zwischen der ersten Zeit (t1) und der zweiten Zeit (t2) und/oder zwischen der zweiten Zeit (t2) und der dritten Zeit (t3) erfolgt.

7. Verfahren nach einem der vorangegangenen Ansprüche, das ferner den Schritt umfasst:
- Ermitteln, welcher der Kreisläufe, in denen der Druck nicht überwacht wird, eine Undichtigkeit aufweist, auf der Grundlage der modulierten Undichtigkeitsmesswerte in der dritten Zeit, die den modulierten Undichtigkeitsmesswert (A31, A32, A33) für die Kreisläufe vereinzelt bekannt geben, in denen der Druck nicht überwacht wird, und eines Ergebnisses des Ermittelns, ob eine Undichtigkeit in dem Hochdruck- oder Niederdruckbereich des Systems vorhanden ist.

8. Verfahren nach einem der vorangegangenen Ansprüche, das ferner den Schritt umfasst:
- Ermitteln, welcher der Kreisläufe, in denen der Druck überwacht wird, eine Undichtigkeit aufweist, auf der Grundlage der modulierten Undichtigkeitsmesswerte (A31, A32, A33) für die entsprechenden Kreisläufe in der dritten Zeit (t3).

9. Verfahren nach einem der vorangegangenen Ansprüche, das ferner den Schritt umfasst:
- Verwenden des Drucks und der Temperatur des Druckluftsystems als Parameter, auf denen das Bestimmen der modulierten Undichtigkeitsmesswerte (A1, A2, A31, A32, A33) zu stützen ist.

10. Vorrichtung zum Bestimmen einer Undichtigkeit in einem Druckluftsystem (299) eines Kraftfahrzeugs (100; 110), wobei das System während des Betriebs kontinuierlich mit Druck beaufschlagt ist und eine Vielzahl von Kreisläufen (K1-K5) umfasst, von denen einige Hockdruckkreisläufe und einige Niederdruckkreisläufe betreffen können, und wobei der Druck in einer Anzahl von Kreisläufen überwacht wird, die geringer als die Anzahl aller Kreisläufe ist,
**gekennzeichnet durch**
- Mittel (280; 290; 500) zum Ermitteln auf der Grundlage von modulierten Undichtigkeitsmesswerten (A1, A2) in einer ersten Zeit (t1) und einer zweiten Zeit (t2), ob eine Undichtigkeit in dem Hockdruck- oder Niederdruckbereich des Systems vorhanden ist, nachdem die Druckbeaufschlagung ausgeschaltet wurde, wobei die beiden Zeiten aufeinander folgen;
- Mittel (280; 290; 500) zum Bestimmen, in welchem Kreislauf eine Undichtigkeit vorhanden ist, auf der Grundlage von modulierten Undichtigkeitsmesswerten (A31, A32, A33) in einer dritten Zeit (t3), die auf die erste Zeit (t1) und die zweite et (t2) folgt und in der diese den modulierten Undichtigkeitsmesswert für die Kreisläufe vereinzelt bekannt gegeben, in denen der Druck überwacht wird.

11. Vorrichtung nach Anspruch 10, die ferner umfasst:
- Mittel (280; 290; 500) zum Auswählen eines Hochdruckkreislaufs oder eines Niederdruckkreislaufs; und
- Mittel (280; 290; 500) zum Ermitteln auf der Grundlage von Undichtigkeitsmesswerten in der ersten Zeit (t1) und der zweiten Zeit (t2) in dem ausgewählten Hochdruck- oder Niederdruckkreislauf, ob eine Undichtigkeit in dem Hochdruck- oder Niederdruckbereich des Systems vorhanden ist.

12. Vorrichtung nach Anspruch 10 oder 11, die ferner umfasst:
- Mittel (280; 290; 500) zum Bestimmen eines Verhältnisses (RATIO; A2/A1; A1/A2) zwischen einem entsprechenden modulierten Undichtigkeitsmesswert in der ersten Zeit (t1) und einem entsprechenden modulierten Undichtigkeitsmesswert in der zweiten Zeit (t2); und
- Mittel (280; 290; 500) zum Ermitteln auf der Grundlage des Verhältnisses, ob eine Undichtigkeit in dem Hochdruck- oder Niederdruckbereich des Systems vorhanden ist.

13. Vorrichtung nach Anspruch 12, die ferner umfasst:
- Mittel (280; 290; 500) zum Ermitteln, ob der ausgewählte Hochdruck- oder Niederdruckkreislauf von einer Undichtigkeit betroffen ist, wenn das Verhältnis (RATIO) kleiner als ein vorbestimmter Wert ist, oder
- Mittel (280; 290; 500) zum Bestimmen, dass der ausgewählte Hochdruck- oder Niederdruckkreislauf nicht von einer Undichtigkeit betroffen ist, wenn das Verhältnis (RATIO) größer als ein vorbestimmter Wert ist.

14. Vorrichtung nach einem der Ansprüche 10 bis 13, die ferner umfasst:
- Mittel (280; 290; 500) zum Ermitteln, wann oder ob die modulierten Undichtigkeitsmesswerte (A31, A32, A33) in der dritten Zeit (t3) den modulierten Undichtigkeitsmesswert für die Kreisläufe vereinzelt bekannt geben, in denen der Druck überwacht wird; und
- Mittel (280; 290; 500) zum Ermitteln der dritten Zeit (t3) auf der Grundlage davon.

15. Vorrichtung nach einem der Ansprüche 10 bis 14, die ferner umfasst:
- Mittel (280; 290; 500) zum Einwirken auf das Druckluftsystem, sodass ein Druckabfall zwischen der ersten Zeit (t1) und der zweiten Zeit (t2) und/oder zwischen der zweiten Zeit (t2) und der dritten Zeit (t3) erfolgt.

16. Vorrichtung nach einem der Ansprüche 10 bis 15, die ferner umfasst:
- Mittel (280; 290; 500) zum Ermitteln, welcher der Kreisläufe, in denen der Druck nicht überwacht wird, eine Undichtigkeit aufweist, auf der Grundlage der modulierten Undichtigkeitsmesswerte (A31, A32, A33) in der dritten Zeit, die den modulierten Undichtigkeitsmesswert für die Kreisläufe vereinzelt bekannt geben, in denen der Druck nicht überwacht wird, und eines Ergebnisses des Ermittelns, ob eine Undichtigkeit in dem Hochdruck- oder Niederdruckbereich des Systems vorhanden ist.

17. Vorrichtung nach einem der Ansprüche 10 bis 16, die ferner umfasst:
- Mittel (280; 290; 500) zum Ermitteln, welcher der Kreisläufe, in denen der Druck überwacht wird, eine Undichtigkeit aufweist, auf der Grundlage der modulierten Undichtigkeitsmesswerte (A31, A32, A33) für die entsprechenden Kreisläufe in der dritten Zeit (t3).

18. Vorrichtung nach einem der Ansprüche 10 bis 17, die umfasst:
- Mittel (280, 290, 500) zum Verwenden des Drucks und der Temperatur des Druckluftsystems als Parameter, auf denen das Bestimmen der modulierten Undichtigkeitsmesswerte (A1, A2, A31, A32, A33) zu stützen ist.

19. Kraftfahrzeug (100; 110) mit einer Vorrichtung nach einem der Ansprüche 10 bis 18.

20. Kraftfahrzeug (100; 110) nach Anspruch 19, wobei das Kraftfahrzeug ein Lastkraftwagen, ein Bus oder ein Personenkraftwagen ist.

21. Computerprogramm (P) zum Ermitteln einer Undichtigkeit in einem Druckluftsystem eines Kraftfahrzeugs, wobei das Programm (P) einen Programmcode umfasst, der dazu eingerichtet ist, eine elektronische Steuereinheit (280; 500) oder einen mit der elektronischen Steuereinheit (280; 500) verbundenen anderen Computer (290; 500) dazu zu veranlassen, die Schritte nach einem der Ansprüche 1 bis 9 auszuführen.

22. Computerprogrammprodukt mit einem auf einem computerlesbaren Medium gespeicherten Programmcode, das dazu eingerichtet ist, die Verfahrensschritte nach einem der Ansprüche 1 bis 9 auszuführen, wenn das Computerprogrammprodukt in einer elektronischen Steuereinheit (280; 500) oder auf einem mit der elektronischen Steuereinheit (280; 500) verbundenen anderen Computer (290; 500) ausgeführt wird.

## Revendications

1. Procédé de détection de fuites dans un système à air comprimé (299) d'un véhicule à moteur (100 ; 110), lequel système est mis sous pression en continu pendant le fonctionnement et comprend une pluralité de circuits (K1-K5), dont certains peuvent être dénommés circuits haute-pression et certains circuits basse-pression, la pression étant contrôlée dans un nombre de circuits plus petit que le nombre total de circuits,
**caractérisé par** les étapes consistant à :
- déterminer, après que ladite mise sous pression a été coupée, s'il y a une fuite dans la partie haute-pression ou la partie basse-pression du système en fonction de valeurs d'une mesure de fuite modulée (A1, A2) à un premier instant (t1) et à un deuxième instant (t2), lesquels deux instants se suivent ;
- décider dans quel circuit il y a une fuite en fonction de mesures de fuite modulées (A31, A32, A33) à un troisième instant (t3) auquel elles manifestent isolément ladite mesure de fuite modulée pour les circuits dans lesquels la pression est contrôlée.

2. Procédé selon la revendication 1, comprenant en outre les étapes consistant à :
- choisir un circuit haute-pression ou un circuit basse-pression ; et
- déterminer s'il y a une fuite dans la partie haute-pression ou la partie basse-pression du système en fonction de valeurs d'une mesure de fuite modulée audit premier instant (t1) et audit deuxième instant (t2) dans ledit circuit haute-pression ou circuit basse-pression choisi.

3. Procédé selon la revendication 1 ou 2, comprenant en outre les étapes consistant à :
- déterminer un ratio (RATIO ; A2/A1 ; A1/A2) entre une mesure de fuite modulée respective audit premier instant (t1) et audit deuxième instant (t2) ; et
- déterminer en fonction dudit ratio (RATIO) s'il y a une fuite dans la partie haute-pression or la partie basse-pression du système.

4. Procédé selon la revendication 3, comprenant en outre l'étape consistant à :
- déterminer si ledit circuit haute-pression ou circuit basse-pression choisi est affecté par une fuite si ledit ratio (RATIO) est inférieur à une valeur prédéterminée,
ou l'étape consistant à :
- déterminer que ledit circuit haute-pression ou circuit basse-pression choisi n'est pas affecté par une fuite si ledit ratio (RATIO, A2/A1, A1/A2) est supérieur à une valeur prédéterminée.

5. Procédé selon l'une quelconque des revendications précédentes, comprenant en outre les étapes consistant à :
- déterminer quand ou si lesdites mesures de fuite modulées (A31, A32, A33) audit troisième instant (t3) manifestent isolément ladite mesure de fuite modulée pour les circuits dans lesquels la pression est contrôlée ; et
- déterminer ledit troisième instant (t3) en fonction de cette détermination.

6. Procédé selon l'une quelconque des revendications précédentes, comprenant en outre l'étape consistant à :
- influencer le système à air comprimé de façon qu'il se produise une chute de pression entre ledit premier instant (t1) et ledit deuxième instant (t2), et/ou entre ledit deuxième instant (t2) et ledit troisième instant (t3).

7. Procédé selon l'une quelconque des revendications précédentes, comprenant en outre l'étape consistant à :
- déterminer lequel des circuits dans lesquels la pression n'est pas contrôlée a une fuite en fonction desdites mesure de fuite modulées audit troisième instant qui manifestent isolément ladite mesure de fuite modulée (A31, A32, A33) pour les circuits dans lesquels la pression est contrôlée, et un résultat de ladite détermination du fait qu'il y a une fuite dans la partie haute-pression ou la partie basse-pression du système.

8. Procédé selon l'une quelconque des revendications précédentes, comprenant en outre l'étape consistant à :
- déterminer lequel des circuits dans lesquels la pression est contrôlée a une fuite, en fonction desdites mesures de fuite modulées (A31, A32, A33) pour les circuits respectifs audit troisième instant (t3).

9. Procédé selon l'une quelconque des revendications précédentes, comprenant en outre l'étape consistant à :
- utiliser la pression et la température du système à air comprimé en tant que paramètres sur lesquels baser la détermination desdites mesures de fuite modulées (A1, A2, A31, A32, A33).

10. Dispositif de détection de fuites dans un système à air comprimé (299) d'un véhicule à moteur (100 ; 110), lequel système est mis sous pression en continu pendant le fonctionnement et comprend une pluralité de circuits (K1-K5), dont certains peuvent être dénommés circuits haute-pression et certains circuits basse-pression, la pression étant contrôlée dans un nombre de circuits plus petit que le nombre total de circuits,
**caractérisé par**
- des moyens (280 ; 290 ; 500) pour déterminer, après que ladite mise sous pression a été coupée, s'il y a une fuite dans la partie haute-pression ou la partie basse-pression du système en fonction de valeurs d'une mesure de fuite modulée (A1, A2) à un premier instant (t1) et à un deuxième instant (t2), lesquels deux instants se suivent ;
- des moyens (280 ; 290 ; 500) pour décider dans quel circuit il y a une fuite en fonction de mesures de fuite modulées (A31, A32, A33) à un troisième instant (t3), qui suit lesdits premier instant (t1) et deuxième instant (t2), et auquel elles manifestent ladite mesure de fuite modulée pour les circuits dans lesquels la pression est contrôlée.

11. Dispositif selon la revendication 10, comprenant en outre :
- des moyens (280 ; 290 ; 500) pour choisir un circuit haute-pression ou un circuit basse-pression ; et
- des moyens (280 ; 290 ; 500) pour déterminer s'il y a une fuite dans la partie haute-pression ou la partie basse-pression du système en fonction de valeurs d'une mesure de fuite modulée audit premier instant (t1) ou audit deuxième instant (t2) dans ledit circuit haute-pression ou circuit basse-pression choisi.

12. Dispositif selon la revendication 10 ou 11, comprenant en outre :
- des moyens (280 ; 290 ; 500) pour déterminer un ratio (RATIO, A2/A1, A1/A2) entre une mesure de fuite modulée respective (A1, A2) audit premier instant (t1) et audit deuxième instant (t2) ; et
- des moyens (280 ; 290 ; 500) pour déterminer en fonction dudit ratio s'il y a une fuite dans la partie haute-pression or la partie basse-pression du système.

13. Dispositif selon la revendication 12, comprenant en outre :
- des moyens (280 ; 290 ; 500) pour déterminer si ledit circuit haute-pression ou circuit basse-pression choisi est affecté par une fuite si ledit ratio (RATIO) est inférieur à une valeur prédéterminée, ou
- des moyens (280 ; 290 ; 500) pour déterminer que ledit circuit haute-pression ou circuit basse-pression choisi n'est pas affecté par une fuite si ledit ratio (RATIO) est supérieur à une valeur prédéterminée.

14. Dispositif selon l'une quelconque des revendications 10 à 13, comprenant en outre :
- des moyens (280 ; 290 ; 500) pour déterminer quand ou si lesdites mesures de fuite modulées (A31, A32, A33) audit troisième instant (t3) manifestent isolément ladite mesure de fuite modulée pour les circuits dans lesquels la pression est contrôlée ; et
- des moyens (280 ; 290 ; 500) pour déterminer ledit troisième instant (t3) en fonction de cette détermination.

15. Dispositif selon l'une quelconque des revendications 10 à 14, comprenant en outre :
- des moyens (280 ; 290 ; 500) pour influencer le système à air comprimé de façon qu'il se produise une chute de pression entre ledit premier instant (t1) et ledit deuxième instant (t2), et/ou entre ledit deuxième instant (t2) et ledit troisième instant (t3).

16. Dispositif selon l'une quelconque des revendications 10 à 15, comprenant en outre :
- des moyens (280 ; 290 ; 500) pour déterminer lequel des circuits dans lesquels la pression n'est pas contrôlée a une fuite en fonction desdites mesures de fuite modulées (A31, A32, A33) audit troisième instant qui manifestent isolément ladite mesure de fuite modulée pour les circuits dans lesquels la pression est contrôlée, et un résultat de ladite détermination du fait qu'il y a une fuite dans la partie haute-pression ou la partie basse-pression du système.

17. Dispositif selon l'une quelconque des revendications 10 à 16, comprenant en outre :
- des moyens (280 ; 290 ; 500) pour déterminer lequel des circuits dans lesquels la pression est contrôlée a une fuite en fonction desdites mesures de fuite modulées (A31, A32, A33) pour les circuits respectifs audit troisième instant (t3).

18. Dispositif selon l'une quelconque des revendications 10 à 17, comprenant en outre :
- des moyens (280 ; 290 ; 500) pour utiliser la pression et la température du système à air comprimé en tant que paramètres sur lesquels baser la détermination desdites mesures de fuite modulées.

19. Véhicule à moteur (100 ; 110) pourvu d'un dispositif selon l'une quelconque des revendications 10 à 18.

20. Véhicule à moteur (100 ; 110) selon la revendication 19, lequel véhicule est l'un quelconque parmi un camion, un bus ou une voiture.

21. Programme informatique (P) pour la détection de fuites dans un système à air comprimé d'un véhicule à moteur, lequel programme (P) contient un code programme destiné à faire exécuter à une unité de commande électronique (280 ; 500) ou à un autre ordinateur (290 ; 500) connecté à l'unité de commande électronique (280 ; 500) les étapes selon l'une quelconque des revendications 1 à 9.

22. Produit de programme informatique contenant un code programme stocké sur un support lisible par ordinateur pour l'exécution des étapes de procédé selon l'une quelconque des revendications 1 à 9, lorsque ledit programme informatique est exécuté sur une unité de commande électronique (280 ; 500) ou sur un autre ordinateur (290 ; 500) connecté à l'unité de commande électronique (280 ; 500).
